# EUROPEAN PATENT SPECIFICATION

(11) **EP 1 331 425 B1**
(45) Date of publication and mention of the grant of the patent: **09.08.2006**
(21) Application number: 03001531.7
(22) Date of filing: 23.01.2003
(51) Int. Cl.: F16K 31/06, F16L 37/088

(54) **Mounting structure of electromagnetic valve**
Montageanordnung eines Elektromagnetventils
Structure de montage d'une soupape électromagnétique

(30) Priority: 25.01.2002 JP 2002017155
(43) Date of publication of application: 30.07.2003
(73) Proprietor: DENSO CORPORATION, Kariya-city, Aichi-pref. 448-8661 (JP)
(72) Inventor: Makino, Tadaaki, Kariya-city, Aichi-pref., 448-8661 (JP)
(74) Representative: TBK-Patent

(56) References cited:
- EP-A- 0 483 430
- EP-A- 0 762 036
- EP-A- 1 083 372
- DE-A- 4 204 417
- DE-A- 19 857 144
- US-A- 4 869 562

## Description

The present invention relates to a mounting structure of an electromagnetic valve and a mounting method of the same. Specifically, the present invention relates to a mounting structure of a high-pressure fluid flow control valve and a mounting method of the same.

When an electromagnetic valve used as a high-pressure fluid flow control valve is mounted by screwing, the entire body of the electromagnetic valve is rotated. Therefore, it is difficult to precisely adjust a direction of an electrical connector that is formed on the electromagnetic valve and receives current supply from an external device for opening or closing a valve member of the electromagnetic valve.

An electromagnetic valve disclosed in Japanese Patent Laid-Open Publication S64-32959 is mounted on a brake master cylinder through a cylindrical connecting part that enables the electromagnetic valve to rotate freely even when the cylindrical connecting part is screwed to the brake master cylinder. Accordingly, a direction of an electrical connecter formed on the electromagnetic valve can be adjusted.

However, the electromagnetic valve has an inflow fluid passage and an outflow fluid passage at both its ends. Therefore, the electromagnetic valve has to be screwed to external devices at the both ends respectively. Accordingly, mounting method of the electromagnetic valve is complicated.

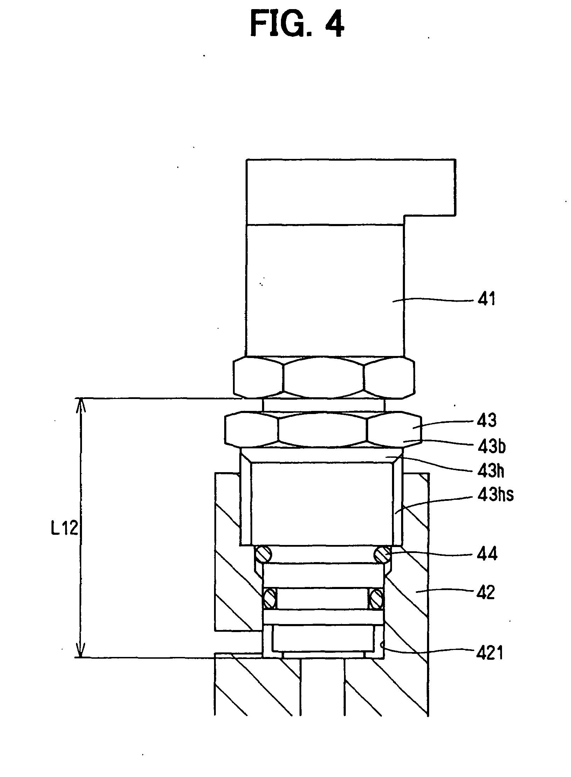

In order to overcome such a problem, an electromagnetic valve shown in FIG. 4 is housed in an accommodation chamber 421 of a housing 42 through an adapter 43 that contacts the bottom surface of an accommodation chamber 421 in order to divide an inflow fuel passage and an outflow fuel passage. The electromagnetic valve shown in FIG. 4 is a high-pressure fluid flow control valve used in a fuel injection system of a diesel engine, for instance. The electromagnetic valve 41 is mounted by screwing the adapter 43 into the accommodation chamber 421. The adapter 43 has a flange part 43b of which outer periphery is formed in the shape of a hexagon so that a screwing jig can be fitted thereto and a wall part 43h having a screw part 43hs screwed into the accommodation chamber 421 of the housing 42. The electromagnetic valve 41 is fixed by the adapter 43 through a clip 44 when the adapter 43 is fully screwed into the accommodation chamber 421. The electromagnetic valve 41 can rotate unless the adapter 43 is fully screwed. Therefore, a direction of an electrical connecter of the electromagnetic valve 41 is precisely adjusted. Meanwhile, the electromagnetic valve 41 is easily mounted through the adapter 43.

However, the mounting structure in FIG. 4 requires lengthened axial length of the electromagnetic valve.

It is therefore an object of the present invention to provide a mounting structure of an electromagnetic valve and a mounting method of the same in which the electromagnetic valve is mounted easily and in a compact fashion.

According to an aspect of the present invention, a mounting structure of an electromagnetic valve includes an electromagnetic valve, a casing, an adapter and a clip. The electromagnetic valve regulates flow of high-pressure fluid. The casing is formed with an accommodation chamber for accommodating a valve connecting part of the electromagnetic valve, an inflow fluid passage and an outflow fluid passage. The inflow fluid passage and the outflow fluid passage respectively communicate with the accommodation chamber. The adapter receives the valve connecting part and is screwed to the valve casing. The clip is disposed between an inner periphery of the adapter and an outer periphery of the electromagnetic valve to prevent relative movement between the electromagnetic valve and the adapter in an axial direction. The valve connecting part is accommodated in the accommodation chamber and contacts the flat bottom surface of the accommodation chamber perpendicularly to fluid-tightly divide the inflow fluid passage and the outflow fluid passage when the adapter is fully screwed to the valve casing. Since the clip is disposed inside the adapter, the axial length of the electromagnetic valve is shortened compared to a mounting structure in which the adapter and the clip are disposed simply in series in the axial direction.

Features and advantages of embodiments will be appreciated, as well as methods of operation and the function of the related parts, from a study of the following detailed description, the appended claims, and the drawings, all of which form a part of this application. In the drawings:
FIG. 1 is a cross-sectional view showing a mounting structure of an electromagnetic valve according to a first embodiment of the present invention;
FIG. 2 is a view showing steps of a mounting method of the electromagnetic valve according to the first embodiment of the present invention;
FIG. 3 is a cross-sectional view showing a mounting structure of an electromagnetic valve according to a second embodiment of the present invention; and
FIG. 4 is a cross-sectional view showing a mounting structure of an electromagnetic valve of a comparative example.

### First Embodiment

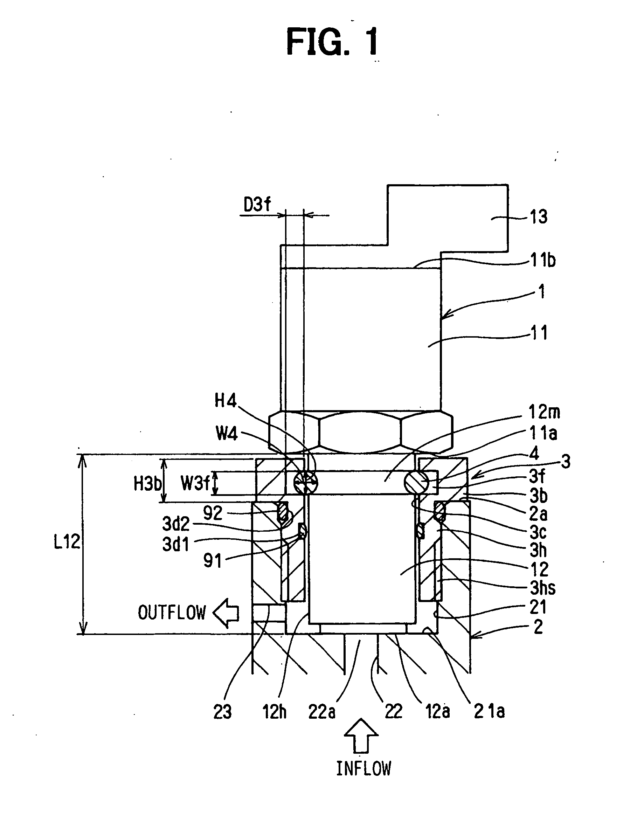

Referring to FIG. 1, a mounting structure of an electromagnetic valve is illustrated. An electromagnetic valve 1 is mounted on a valve casing 2 via an adapter 3 as an intervening member and a clip 4. The electromagnetic valve 1 regulates flow of high-pressure fluid. The valve casing 2 is formed with an accommodation chamber 21 for accommodating a valve connecting part 12 of the electromagnetic valve 1, an inflow fluid passage 22 and an outflow fluid passage 23. The inflow fluid passage 22 and the outflow fluid passage 23 communicate with the accommodation chamber 21 respectively. The adapter 3 is disposed between the electromagnetic valve 1 and the valve casing 2 in the accommodation chamber 21. The adapter 3 receives the electromagnetic valve 1 and is screwed into the valve casing 2. The clip 4 is disposed between the electromagnetic valve 1 and the adapter 3 and enables relative rotations between the adapter 3 and the electromagnetic valve 1 unless the adapter 3 is fully screwed into the valve casing 2. The inflow fluid passage 22 and the outflow fluid passage 23, through which the high-pressure fluid flows, are fluid-tightly divided from each other by an outer body of the connecting part 12 that fluid-tightly contacts on a bottom 21a of the accommodation chamber 21. The electromagnetic valve 1 has a known electromagnetic valve mechanism that reduces the pressure of the high-pressure fluid in the inflow fluid passage 22 to a predetermined pressure. Any other electromagnetic valve mechanism that regulates the flow characteristics of the high-pressure fluid may be applied in the electromagnetic valve 1.

The electromagnetic valve 1 explained in the embodiment is a pressure reducing valve employed in an accumulation type fuel injection system. The accumulation type fuel injection system accumulates high-pressure fuel as high-pressure fluid in a common rail as a kind of a surge tank at a common rail pressure and injects the accumulated high-pressure fuel into combustion chambers of an internal combustion engine. The electromagnetic valve 1 reduces the common rail pressure in accordance with the operating conditions of the internal combustion engine.

As shown in FIG. 1, the electromagnetic valve 1 is formed generally in the shape of a cylinder having a step. The electromagnetic valve 1 includes an electromagnetic valve casing 11 providing a cylindrical part with a larger diameter, the valve connecting part 12 providing another cylindrical part with a smaller diameter and a connector 13 formed on the electromagnetic valve casing 11 as an electrical connection terminal through which the current is supplied from the external device.

The connector 13 is disposed on an axial end 11b of the electromagnetic valve casing 11 opposite from another axial end 11a on which the valve connecting part 12 is formed, as shown in FIG. 1. A terminal is embedded in the connector 13 so that the connector 13 is electrically connected with its companion when the connector 13 is connected with the companion. The connector 13 is disposed on the electromagnetic valve casing 11 so that the connecter 13 is fitted with the companion in a radial direction. Thus, the axial length of the electromagnetic valve 1 is not increased.

The outer periphery 12h of the valve connecting part 12 is accommodated in the accommodation chamber 21. Meanwhile, the outer periphery 12h of the valve connecting part 12 is accommodated in the adapter 3. The valve connecting part 12 is capable of rotating in the adapter 3 unless the adapter 3 is fully screwed into the accommodation chamber 21. A metal-to-metal seal is formed between an axial end 12a of the valve connecting part 12 and the bottom 21a of the accommodation chamber 21 when the adapter 3 is fully screwed into the accommodation chamber 21. The fluid-tightness between the axial end 12a and the valve casing 2 is ensured by an axial force, which is generated by screwing the adapter 3 into the accommodation chamber 21. Thus, the inflow fluid passage 22 opening in the bottom 21a and the outflow fluid passage 23 are fluid-tightly divided from each other across the axial end 12a of the electromagnetic valve 1. The axial end 12a forms the metal-to-metal seal between its entire surface and the bottom 21a. Alternatively, the axial end 12a may be a cylindrical projection that blocks an opening 22a of the inflow fluid passage 22. The fluid-tightness is ensured when the cylindrical projection contacts the bottom 21a in a plane. Pressure-resistance, in which the fluid-tightness against the high-pressure fluid is ensured, is increased in accordance with the pressure applied on the metal-to-metal seal determined by the area of the plane in which the axial end 12a contacts the bottom 21a and the axial force. Therefore, the structure is preferable for the accumulation type fuel injection system that requires fluid-tightness in a relatively high pressure.

The adapter 3 includes a cylindrical wall part 3h and a flange part 3b. The wall part 3h has a screw part 3hs, which is screwed into the valve casing 2. The flange part 3b has a receiving hole 3c for receiving the valve connecting part 12 of the electromagnetic valve 1. The wall part 3h is formed with grooves 3d1, 3d2 in its inner and outer peripheries for respectively accommodating the sealing members 91, 92 such as O-rings. Thus, the fluid-tightness against the atmosphere is ensured at a space between the wall part 3h and the valve connecting part 12, and a space between the wall part 3h and the accommodation chamber 21. The internal diameter of the wall part 3h may be the same as that of the receiving hole 3c of the flange part 3b as shown in FIG. 1. Thus, the inner peripheries of the wall part 3h and the receiving hole 3c of the flange part 3b can be manufactured at the same time.

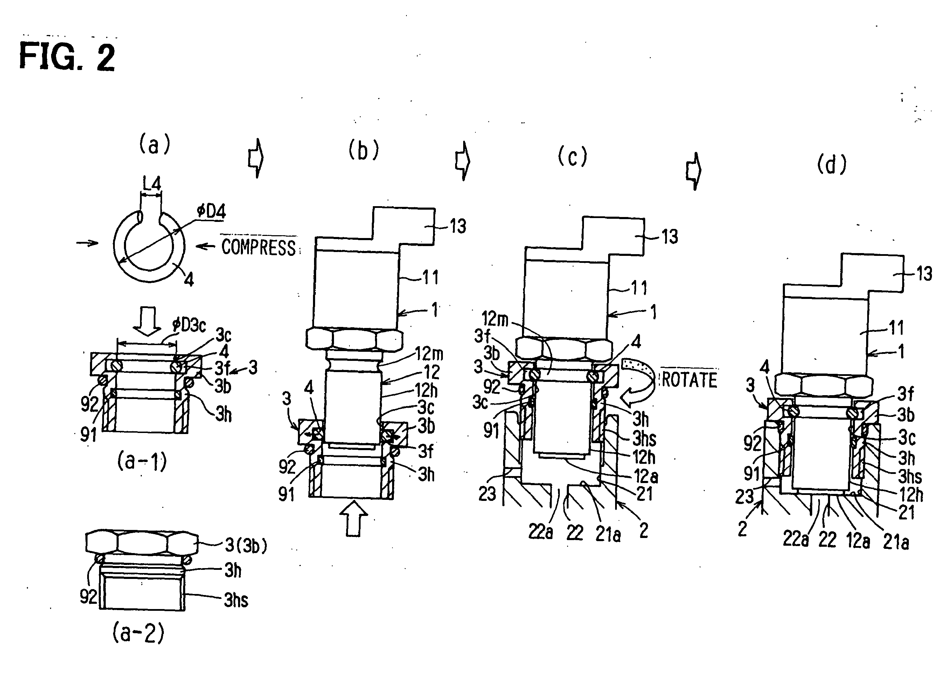

A clip accommodation groove 3f for accommodating the clip 4 is formed in the inner periphery of the receiving hole 3c of the flange part 3b. The outer periphery of the flange part 3b is formed in the shape of a hexagon as shown in FIG. 2 (a-2) so that a screwing jig and the like can be fitted thereto. FIG. 2 (a-1) is a longitudinal sectional diagram showing the adapter 3 into which the clip 4 is inserted. FIG. 2 (a-2) is a side view showing an external appearance of the adapter 3. The clip accommodation groove 3f latches the clip 4, preventing its axial movement. The clip accommodation groove 3f has a width W3f at least larger than the axial height H4 of the cross-section of the clip 4. The outer periphery 12h of the valve connecting part 12 is formed with a fitting groove 12m for latching the clip 4. The clip 4 is caught between the clip accommodation groove 3f and the fitting groove 12m. The clip 4 is accommodated within a height H3b of the flange part 3b required for fitting the screwing jig.

Thus, the clip 4 is disposed inside the flange part 3b of the adapter 3. Therefore, at least the axial length L12 of the valve connecting part 12 is shortened as shown in FIGS. 1 to 3, compared to the structure in which the adapter 43 and the clip 44 are simply disposed serially in the axial direction as shown in the comparative example shown in FIG. 4. As a result, the entire axial length is shortened.

The axial length L12 of the valve connecting part 12 is further shortened by forming the groove 3d2 for accommodating the sealing member 92 in the top 2a of the valve casing 2, which contacts the flange part 3.

The depth D3f of the clip accommodation groove 3f in the radial direction is formed to be larger than the radial width W4 of the cross-section of the clip 4. The electromagnetic valve 1 and the adapter 3 are mounted integrally through the clip 4 made of an elastic material expandable in the radial direction.

Preferably, the clip 4 should be made by shaping a rod-like elastic material such as a metal spring into an annular shape as shown in FIG. 2 (a).

Thus, the clip 4 can be contracted and expanded in the radial direction. Therefore, the clip 4 is fitted between the clip accommodation groove 3f and the fitting groove 12m very easily. The electromagnetic valve 1 and the adapter 3 are integrated when the valve connecting part 12 of the electromagnetic valve 1 is inserted into the adapter 3 after the clip 4 is contracted radially inward and is inserted into the clip accommodation groove 3f of the adapter 3 as shown in FIG. 2. Once the electromagnetic valve 1 and the adapter 3 are integrated, the relative motion therebetween in the axial direction is prevented by the clip 4.

The cross-section of the clip 4 is formed in an annular shape. Alternatively, a shape of a trapezoid and the like may be applied. In a case in which the cross-section is in the shape of a trapezoid, preferably, an edge of a cross-section providing the inner periphery of the clip 4 should form a tapered surface of which internal diameter is gradually reduced in a direction in which the electromagnetic valve 1 is inserted. Thus, the electromagnetic valve 1 is easily inserted into the adapter 3.

An assembling method of the mounting structure of the electromagnetic valve having the above construction will be explained based on FIG. 2.

As shown in FIG. 2, the assembling method includes four steps of process. In the first process shown in FIG. 2 (a), the clip 4 is compressed inwardly and is inserted into the adapter 3 so that the clip 4 is fitted into the clip accommodation groove 3f. In the second process shown in FIG. 2 (b), the electromagnetic valve 1 is inserted and fitted into the adapter 3, and meanwhile, the clip 4 is fitted into the fitting groove 12f of the electromagnetic valve 1. The O-ring 91 is disposed in the adapter 3 before inserting the electromagnetic valve 1. In the third process shown in FIG. 2 (c), the adapter 3 integrated with the electromagnetic valve 1 through the clip 4 is screwed into the valve casing 2. Thus, the electromagnetic valve 1 is mounted by screwing the adapter 3 into the valve casing 2.

If required, the mounting process may further include a fourth process shown in FIG. 2 (d), in which the direction of the connector 13 of the electromagnetic valve 1 is adjusted, and after that, the adapter 3 is fully screwed. In that case, the adapter 3 is not screwed fully in the third process, or the screw connection is slightly loosened first in the fourth process. Thus, the electromagnetic valve 1 is capable of rotating immediately before the adapter 3 is fully screwed into the valve casing 2, or is capable of rotating by slightly loosening the screw connection, so that the direction of the connector 13 is adjusted. Meanwhile, the metal seal for fluid-tightly dividing the inflow fluid passage 22 and the outflow fluid passage 23 is formed by screwing the adapter 3 into the valve casing 2 and by transmitting the axial force, which is generated by screwing the adapter 3, to the electromagnetic valve 1 through the clip 4.

In the first process, a gap L4 of the clip 4 is narrowed by compressing the clip 4 inwardly by hand and the like against the elastic force of the clip 4. Thus, the outer peripheral diameter ΦD4 of the clip 4 is shortened compared to an inner peripheral diameter ΦD3c of the receiving hole 3c. The clip 4 is inserted into the adapter 3 as shown in FIG. 2 (a-1). Thus, the clip 4 is loosely fitted into the clip accommodation groove 3f very easily.

In the second process, when the electromagnetic valve 1 is inserted into the adapter 3, the clip 4 is easily fitted into the fitting groove 12m by inserting the electromagnetic valve 1 while enlarging the inner diameter of the clip 4 to the outer diameter 12h of the valve connecting part 12. Thus, the electromagnetic valve 1 and the adapter 3 are integrated through the clip 4 when the valve connecting part 12 of the electromagnetic valve 1 is inserted into the adapter 3.

In the third process, the adapter 3 integrated with the electromagnetic valve 1 through the clip 4 is screwed into the valve casing 2. Thus, the assembly of the electromagnetic valve 1 and the clip 4 is mounted by simply screwing the adapter 3 into the valve casing 2. The electromagnetic valve 1 is mounted while retaining the direction of the connector 13 in a required direction, at least by the time immediately before the adapter 3 is fully screwed into the valve casing 2. Therefore, the direction of the connector 13 can be adjusted precisely immediately before the adapter 3 is fully screwed into the valve casing 2.

### (Second Embodiment)

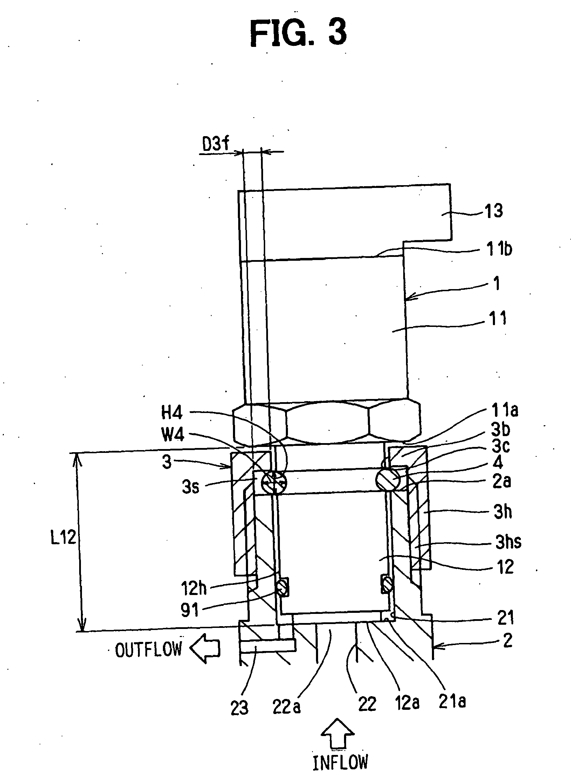

In a mounting structure of the electromagnetic valve of the second embodiment, the clip 4 is accommodated in an accommodation part 3s provided by the wall part 3h and the flange part 3b of the adapter 3 as shown in FIG. 3. The flange part 3b extends inwardly as shown in FIG. 3. The adapter 3 is disposed between the electromagnetic valve 1 and the valve casing 2 that provides the accommodation chamber 21. The wall part 3h is screwed to the screw part formed on the outer periphery of the vale casing 2. The clip 4 is pressed against a surface of the flange part 3b by the axial end of the valve casing 2 when the adapter 3 is screwed to the valve casing 2.

The axial force is applied through the clip 4 to the metal-to-metal seal between the electromagnetic valve 1 and the bottom 21a of the accommodation chamber 21 while the direction of the connector 13 of the electromagnetic valve 1 is adjusted, in a simple structure of the adapter 3 in which the clip 4 is disposed in the accommodation part 3s provided by the wall part 3h and the flange part 3b.

In the mounting structure, the fluid-tightness against the atmosphere is ensured by the sealing member 91 alone, which provides the fluid-tightness at the space between the electromagnetic valve 1 and the valve casing 2. Thus, a simple and low-cost mounting structure of the electromagnetic valve is provided.

The present invention should not be limited to the disclosed embodiments, but may be implemented in many other ways without departing from the scope of the invention as defined by the appended claims.

## Claims

1. A Mounting structure of an electromagnetic valve, the mounting structure comprising:
an electromagnetic valve (1) for regulating flow of high-pressure fluid;
a casing (2) formed with an accommodation chamber (21) for accommodating a valve connecting part (12) of the electromagnetic valve (1), an inflow fluid passage (22) and an outflow fluid passage (23), the inflow fluid passage (22) and the outflow fluid passage (23) respectively communicating with the accommodation chamber (21);
an adapter (3) that receives the valve connecting part (12) and is screwed to the valve casing (2); and
a clip (4) that is disposed between an inner periphery of the adapter (3) and an outer periphery of the electromagnetic valve (1) to prevent relative movement between the electromagnetic valve (1) and the adapter (3) in an axial direction,
**characterized in that**
the valve connecting part (12) is accommodated in the accommodation chamber (21) and contacts a bottom (21a) of the accommodation chamber (21) the bottom (21a) is formed in the shape of a flat surface, and the valve connecting part (12) contacts the bottom (21a) perpendicularly to fluid-tightly divide the inflow fluid passage (22) and the outflow fluid passage (23) when the adapter (3) is screwed to the valve casing (2).

2. The mounting structure of the electromagnetic valve (1) as in claim 1, wherein,
the adapter (3) includes a wall part (3h) formed with a screw part (3hs) that is screwed to the valve casing (2) and a flange part (3b) that is disposed on an end of the wall part (3h) and is formed with a receiving hole (3c) for receiving the electromagnetic valve (1) rotatably, and
the clip (4) is accommodated in a groove (3f) formed in an inner periphery of the flange part (3b).

3. The mounting structure of the electromagnetic valve (1) as in claim 1, wherein,
the adapter (3) includes a wall part (3h) formed with a screw part (3hs) that is screwed to the valve casing (2) and a flange part (3b) that is inwardly formed on an end of the wall part (3h) and is formed with a receiving hole (3c) for receiving the electromagnetic valve (1) rotatably, and
the clip (4) is disposed in an accommodation part (3s) provided by the wall part (3h) and the flange part (3b) and is pressed against an end surface of the flange part (3b) by an end of the valve casing (2) when the adapter (3) is screwed to the valve casing (2).

4. The mounting structure of the electromagnetic valve (1) as in one of claims 1 to 3, wherein the clip (4) is made by shaping a rod-like elastic material into an annular shape and is fitted into a groove (12m) formed on an outer periphery of the electromagnetic valve (1).

5. An assembling method of an electromagnetic valve, the assembling method comprising the steps of:
assembling a valve connecting part (12) of an electromagnetic valve (1) and an adapter (3) through a clip (4) that prevents relative movement between the electromagnetic valve (1) and the adapter (3) in an axial direction,
**characterized by**
screwing the assembly of the electromagnetic valve (1), the clip (4) and the adapter (3) to a valve casing (2) so that the valve connecting part (12) perpendicularly contacts a bottom (21a) of an accomodation chamber (21), which accomodates the valve connecting part (12), wherein the bottom (21a) of the accomodation chamber (21) is formed in the shape of a flat surface.

6. The assembling method of the electromagnetic valve (1) as in claim 5, the assembling method further comprising the step of assembling an assembly of the adapter (3) and the clip (4) to the valve connecting part (12).

7. The assembling method of the electromagnetic valve (1) as in claim 5 or 6, the assembling method further comprising the step of adjusting a direction of an electrical connector (13) disposed on the electromagnetic valve (1) before the adapter (3) is fully screwed.

## Patentansprüche

1. Montageanordnung eines elektromagnetischen Ventils, wobei die Montageanordnung umfasst:
ein elektromagnetisches Ventil (1) zum Regulieren einer Strömung eines Hochdruckfluids;
einen Kasten (2), der mit einer Aufnahmekammer (21) zum Aufnehmen eines Ventilverbindungsteils (12) des elektromagnetischen Ventils (1), einem Einström-Fluiddurchtritt (22) und einem Ausström-Fluiddurchtritt (23) ausgebildet ist, wobei der Einström-Fluiddurchtritt (22) und der Ausström-Fluiddurchtritt (23) entsprechend mit der Aufnahmekammer (21) in Verbindung sind;
einen Adapter (3), der das Ventilverbindungsteil (12) empfängt und an den Ventilkasten (2) geschraubt ist; und
eine Klammer (4), die zwischen einem inneren Umfang des Adapters (3) und einem äußeren Umfang des elektromagnetischen Ventils (1) vorgesehen ist, um eine Relativbewegung zwischen dem elektromagnetischen Ventil (1) und dem Adapter (3) in einer axialen Richtung zu verhindern,
**dadurch gekennzeichnet, dass**
das Ventilverbindungsteil (12) in der Aufnahmekammer (21) aufgenommen ist und einen Boden (21a) der Aufnahmekammer (21) berührt, wobei der Boden (21a) in der Form einer flachen Fläche ausgebildet ist, und das Ventilverbindungsteil (12) den Boden (21a) rechtwinklig berührt, um den Einström-Fluiddurchtritt (22) und den Ausströmfluiddurchtritt (23) fluiddicht zu unterteilen, wenn der Adapter (3) an den Ventilkasten (2) geschraubt ist.

2. Montageanordnung eines elektromagnetischen Ventils (1) nach Anspruch 1, wobei der Adapter (3) ein Wandteil (3h) hat, das mit einem Schraubenteil (3hs) ausgebildet ist, das an den Ventilkasten (2) geschraubt ist, und ein Flanschteil (3b), das bei einem Ende des Wandteils (3h) vorgesehen ist und mit einem Aufnahmeloch (3c) ausgebildet ist, um das elektromagnetische Ventil (1) drehbar aufzunehmen, und die Klammer (4) in einer Nut (3f) aufgenommen ist, die in einem inneren Umfang des Flanschteils (3b) ausgebildet ist.

3. Montageanordnung eines elektromagnetischen Ventils (1) nach Anspruch 1, wobei der Adapter (3) ein Wandteil (3h) hat, das mit einem Schraubteil (3hs) ausgebildet ist, das an den Ventilkasten (2) geschraubt ist, und ein Flanschteil (3b), das bei einem Ende des Wandteils (3h) nach innen ausgebildet ist, und mit einem Aufnahmeloch (3c) ausgebildet ist, um das elektromagnetische Ventil (1) drehbar zu empfangen, und die Klammer (4) in einem Aufnahmeteil (3s) vorgesehen ist, das durch das Wandteil (3h) und das Flanschteil (3b) bereit gestellt ist, und durch ein Ende des Ventilkastens (2) gegen eine EndOberfläche des Flanschteils (3b) gedrückt ist, wenn der Adapter (3) an den Ventilkasten (2) geschraubt ist.

4. Montageanordnung eines elektromagnetischen Ventils (1) nach einem der Ansprüche 1 bis 3, wobei die Klammer (4) durch das Formen eines stangenartigen elastischen Materials in eine ringförmige Form hergestellt ist, und in eine Nut (12m) eingepasst ist, die auf einem äußeren Umfang des elektromagnetischen Ventils (1) ausgebildet ist.

5. Verfahren zum Zusammenbau eines elektromagnetischen Ventils, wobei das Verfahren zum Zusammenbau folgende Schritte umfasst:
Zusammenbauen eines Ventilverbindungsteils (12) eines elektromagnetischen Ventils (1) und eines Adapters (3) durch eine Klammer (4), die eine Relativbewegung zwischen dem elektromagnetischen Ventil (1) und dem Adapter (3) in einer axialen Richtung verhindert,
**gekennzeichnet durch**
Schrauben der Baugruppe des elektromagnetischen Ventils (1), der Klammer (4) und des Adapters (3) an einen Ventilkasten (2), so dass das Ventilverbindungsteil (12) einen Boden (21a) einer Aufnahmekammer (21) rechtwinklig berührt, die das Ventilverbindungsteil (12) aufnimmt, wobei der Boden (21a) der Aufnahmekammer (21) in der Form einer flachen Fläche ausgebildet ist.

6. Verfahren zum Zusammenbau eines elektromagnetischen Ventils (1) nach Anspruch 5, wobei das Verfahren zum Zusammenbau außerdem den Schritt umfasst, eine Baugruppe des Adapters (3) und der Klammer (4) an das Ventilverbindungsteil (12) zu bauen.

7. Verfahren zum Zusammenbau eines elektromagnetischen Ventils (1) nach Anspruch 5 oder 6, wobei das Verfahren zum Zusammenbau außerdem den Schritt umfasst, eine Richtung eines elektrischen Verbinders (13) einzustellen, der auf dem elektromagnetischen Ventil (1) vorgesehen ist, bevor der Adapter (3) vollständig geschraubt ist.

## Revendications

1. Structure de montage d'une soupape électromagnétique, la structure de montage comprenant :
une soupape électromagnétique (1) pour réguler l'écoulement d'un fluide à haute pression ;
un carter (2) contenant une chambre de réception (21) pour recevoir une partie de liaison de soupape (12) de la soupape électromagnétique (1), un passage d'arrivée de fluide (22) et un passage de sortie de fluide (23), le passage d'arrivée de fluide (22) et le passage de sortie de fluide (23) communiquant respectivement avec la chambre de réception (21) ;
un adaptateur (3) qui reçoit la partie de liaison de soupape (12) et est vissé sur le carter (2) de soupape ; et
une attache (4) qui est disposée entre une périphérie intérieure de l'adaptateur (3) et une périphérie extérieure de la soupape électromagnétique (1) pour empêcher un mouvement relatif entre la soupape électromagnétique (1) et l'adaptateur (3) dans une direction axiale,
**caractérisé en ce que**
la partie de liaison de soupape (12) est logée dans la chambre de réception (21) et est en contact avec un fond (21a) de la chambre de réception (21), le fond (21a) a la forme d'une surface plate et la partie de liaison de soupape (12) est en contact avec le fond (21a) perpendiculairement afin de séparer d'une manière étanche le passage d'arrivée de fluide (22) et le passage de sortie de fluide (23) quand l'adaptateur (3) est vissé sur le carter (2) de soupape.

2. Structure de montage d'une soupape électromagnétique (1) selon la revendication 1, dans laquelle,
l'adaptateur (3) comprend une partie de paroi (3h) formée d'une partie filetée (3hs) qui est vissée sur le carter (2) de soupape et d'une partie de rebord (3b) qui est disposée sur une extrémité de la partie de paroi (3h) et est formée avec un trou de réception (3c) pour recevoir la soupape électromagnétique (1) de manière rotative, et l'attache (4) est reçue dans une rainure (3f) formée dans une périphérie intérieure de la partie de rebord (3b).

3. Structure de montage d'une soupape électromagnétique (1) selon la revendication 1, dans laquelle,
l'adaptateur (3) comprend une partie de paroi (3h) formée d'une partie filetée (3hs) qui est vissée sur le carter (2) de soupape et d'une partie de rebord (3b) qui est formée vers l'intérieur sur une extrémité de la partie de paroi (3h) et est formée avec un trou de réception (3c) pour recevoir la soupape électromagnétique (1) de manière rotative, et l'attache (4) est disposée dans une partie de réception (3s) appartenant à la partie de paroi (3h) et à la partie de rebord (3b) et est pressée contre une surface d'extrémité de la partie de rebord (3b) par une extrémité du carter (2) de soupape quand l'adaptateur (3) est vissé sur le carter (2) de soupape.

4. Structure de montage d'une soupape électromagnétique (1) selon l'une des revendications 1 à 3, dans laquelle l'attache (4) est fabriquée en façonnant une matière élastique en forme de barre en une forme annulaire et est placée dans une rainure (12m) formée sur une périphérie extérieure de la soupape électromagnétique (1).

5. Procédé d'assemblage d'une soupape électromagnétique, le procédé d'assemblage comprenant les étapes consistant à :
assembler une partie de liaison de soupape (12) d'une soupape électromagnétique (1) et un adaptateur (3) par l'intermédiaire d'une attache (4) qui empêche un mouvement relatif entre la soupape électromagnétique (1) et l'adaptateur (3) dans une direction axiale,
**caractérisé par**
le vissage de l'ensemble constitué de la soupape électromagnétique (1), de l'attache (4) et de l'adaptateur (3) sur un carter (2) de soupape de façon que la partie de liaison de soupape (12) soit en contact perpendiculairement avec un fond (21a) d'une chambre de réception (21), qui reçoit la partie de liaison de soupape (12), le fond (21a) de la chambre de réception (21) ayant la forme d'une surface plate.

6. Procédé d'assemblage d'une soupape électromagnétique (1) selon la revendication 5, le procédé d'assemblage comprenant en outre l'étape consistant à assembler un ensemble constitué de l'adaptateur (3) et de l'attache (4) à la partie de liaison de soupape (12).

7. Procédé d'assemblage d'une soupape électromagnétique (1) selon la revendication 5 ou 6, le procédé d'assemblage comprenant en outre l'étape consistant à régler une direction d'un connecteur électrique (13) disposé sur la soupape électromagnétique (1) avant que l'adaptateur (3) soit complètement vissé.
